# EUROPEAN PATENT APPLICATION

(11) **EP 3 933 115 A1**
(43) Date of publication of application: **05.01.2022**
(21) Application number: 20802542.9
(22) Date of filing: 19.03.2020
(51) Int. Cl.: E02F 9/00, F16L 3/22

(54) **HYDRAULIC PIPING CLAMP DEVICE FOR CONSTRUCTION MACHINE**

(30) Priority: 08.05.2019 JP 2019088139
(71) Applicant: KOBELCO CONSTRUCTION MACHINERY CO., LTD., Hiroshima-shi Hiroshima 731-5161 (JP)
(72) Inventor: OKURA, Hideyuki, Hiroshima-shi, Hiroshima 731-5161 (JP); MATSUO, Keiko, Hiroshima-shi, Hiroshima 731-5161 (JP); KARASAWA, Masataka, Hiroshima-shi, Hiroshima 731-5161 (JP); YAMAMOTO, Hideo, Hiroshima-shi, Hiroshima 731-5161 (JP)
(74) Representative: TBK
(86) International application number: PCT/JP2020/012246
(87) International publication number: WO 2020/225986

(57) **Abstract**

Provided is a hydraulic piping clamp device for a construction machine, with which it is possible to easily assemble a plurality of clamp members used to fasten hydraulic piping. A fastener (5) includes a bracket (6) and a plurality of clamp members (7). Hydraulic hoses (4) are respectively held by the plurality of clamp members (7). Each clamp member (7) has a holding portion (71) for holding a hydraulic hose and an insertion hole into which a guide bar (65) can be inserted. The clamp members (7) are mounted on the bracket (6) by inserting the guide bar (65) into the insertion hole in the clamp members (7). When two adj acent clamp members move away from one another, a first engaging portion (73) of one clamp member engages with a second engaging portion (75) of the other clamp member.

## Description

### Technical Field

The present invention relates to a hydraulic piping clamp device for a construction machine, and more particularly to a hydraulic piping clamp device for clamping a hydraulic piping in a construction machine.

### Background Art

Conventionally, a technique relating to the structure of a clamp for supporting a hydraulic hose is proposed in a construction machine such as a hydraulic shovel as in the technique described in Patent Literature 1.

Specifically, in the technique described in Patent Literature 1, a clamp includes a support member, a plurality of clamp elements, a bushing, a pressing member, a guide rod, and the like.

Element holes are formed in each clamping element, and each clamping element is positioned by inserting guides rod into the element holes. When the nuts are screwed to both ends of the guide rod, each of the connected clamp elements is held between the support portion and the pressing plate portion.

### Citation List

### Patent Literature

Patent Literature 1: Japanese Unexamined Patent Publication No. 2013-204365. In Patent Literature 1, each clamp element is attached with a hydraulic hose through the bushing. Thus, during attachment of each clamp element to the guide rod, each clamp element is likely to be displaced in a direction from the guide rod by the reaction force of the hydraulic hose.

Therefore, in the technique described in Patent Literature 1, there is a need for a operator to mount each clamp element on the guide rod while pressing each clamp element with a hand, and it is not necessary to have good assembling workability.

### Summary of Invention

An object of the present invention is to provide a hydraulic piping clamp device for a construction machine capable of easily assembling a plurality of clamp members used for fastening a hydraulic piping.

In order to achieve the above object, provided by the present invention is a hydraulic piping clamp device for fixing a plurality of hydraulic pipes to a machine body of the construction machine in the construction machine, comprising: a support mounted on the machine body of the construction machine and including an end wall and at least one guide bar extending horizontally from the end wall, a side portion of the support opposite to the end wall being opened, and the support supporting the plurality of hydraulic pipes so that the plurality of hydraulic pipes is aligned along an arrangement direction parallel to the at least one guide bar: and a plurality of clamp members mounted to the support to clamp the plurality of hydraulic pipes on the support, each of the plurality of clamp members having a holding portion holding the hydraulic pipe and being formed of at least one insertion hole for allowing the at least one guide bar to be inserted along the arrangement direction, wherein the plurality of clamp members is mounted on the support so that the plurality of clamp members is aligned along the arrangement direction by inserting the insertion hole of each of the plurality of clamp members in order into the at least one guide bar, each of the plurality of clamp members includes: a main body portion: a first engaging portion projecting in the arrangement direction from one end portion of the main body portion in the arrangement direction; and a second engaging portion formed at other end portion opposite to the one end portion of the main body portion and having a shape capable of engaging with the first engaging portion; the relative positions of the first engaging portion and the second engaging portion in the arrangement direction are set so that, in a state in which the first clamp member of the plurality of clamp members is mounted on the support and the second clamp member of the plurality of clamp members is further mounted on the support, the first engaging portion of the second clamp member is disposed at an interval in the arrangement direction with respect to the second engaging portion of the first clamp member beyond the second engaging portion of the first clamp member thereby the main body portion of the first clamp member and the main body portion of the second clamp member can be brought into contact with each other in the support, and when the main body portions of the first clamp member and the second clamp member mounted on the support move in a direction away from each other, the first engaging portion of the second clamping member engage with the second engaging portion of the first clamping member to prevent further separate the body portions from each other.

### Brief Description of Drawings

FIG. 1 is a schematic perspective view showing a machine body portion of a hydraulic shovel according to an embodiment of the present invention.
FIG. 2 is a perspective view showing hydraulic hoses clamped by the hydraulic piping clamp device according to the embodiment of the present invention.
FIG. 3 is a perspective view showing the hydraulic piping clamp device for clamping hydraulic hoses according to the embodiment of the present invention.
FIG. 4 is a perspective view showing a support of the hydraulic piping clamp device according to the embodiment of the present invention.
FIG. 5 is a plan view showing a clamp member of the hydraulic piping clamp device according to the embodiment of the present invention.
FIG. 6 is a front view of the clamp member in FIG. 5 viewed from the direction of arrow VI.
FIG. 7 is a side view of the clamp member in FIG. 5 viewed from the direction of arrow VII.
FIG. 8 is a perspective view showing a state in which a first clamp member is mounted on the support in the hydraulic piping clamp device according to the embodiment of the present invention.
FIG. 9 is a perspective view showing a state in which the hose is fitted to the first clamp member mounted on the support in the hydraulic piping clamp device according to the embodiment of the present invention.
FIG. 10 is a perspective view showing a state in which a second clamp member is mounted on the support of the hydraulic piping clamp device according to the embodiment of the present invention.
FIG. 11 is a side view showing an engagement state of two adjacent clamp members in the hydraulic piping clamp device according to the embodiment of the present invention.
FIG. 12 is a perspective view showing a state in which a hose is fitted to the second clamp member mounted on the support in the hydraulic piping clamp device according to the embodiment of the present invention.
FIG. 13 is a view and its enlarged view showing an engagement state of each of the clamp members when a final clamp member is mounted on the support in the hydraulic piping clamp device according to the embodiment of the present invention.
FIG. 14 is a view and its enlarged view showing an engagement state of each of the clamp members when the pressing plate is mounted on the support in the hydraulic piping clamp device according to the embodiment of the present invention.

### Description of Embodiments

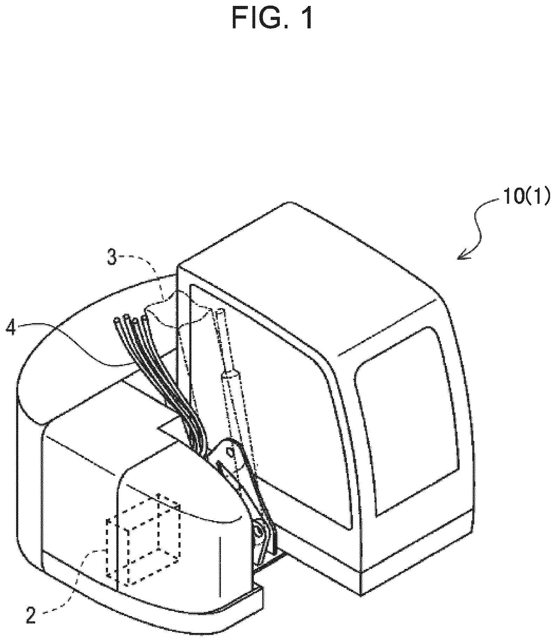

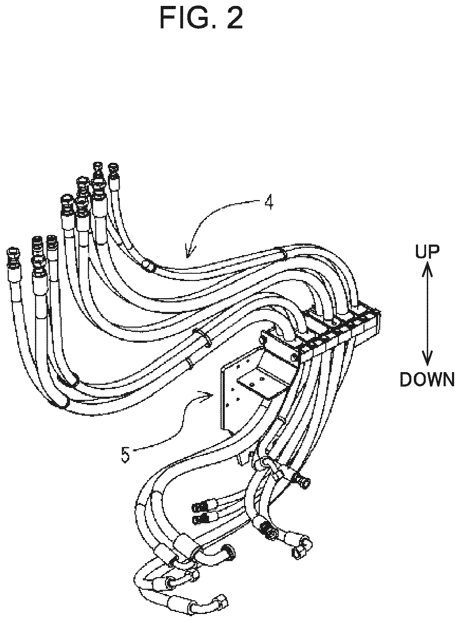

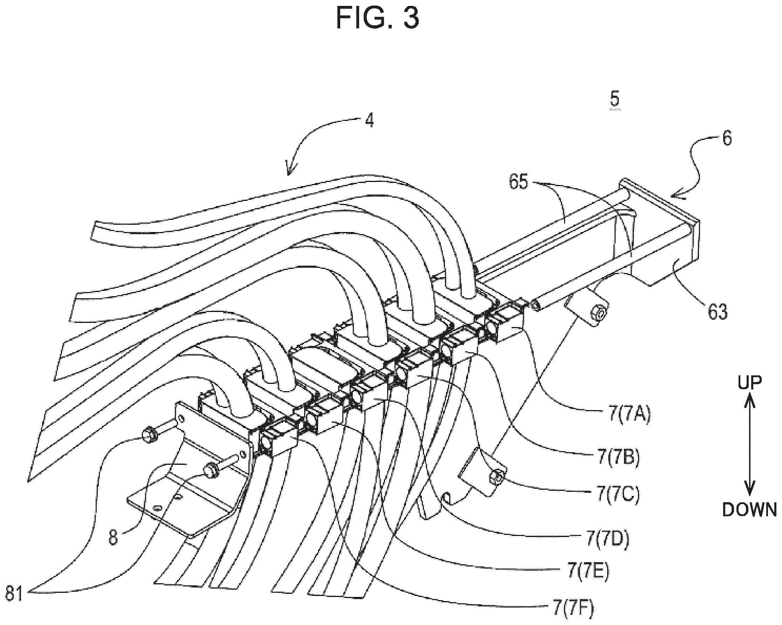

A hydraulic piping clamp structure (a hydraulic piping clamp device) of a construction machine according to an embodiment of the present invention will be described with reference to FIGS. 1 to 14. In the following, a fastener 5 (see FIGS. 2 and 3) for clamping the hydraulic hoses 4 of the hydraulic shovel 1 (see FIG. 1) is shown as the hydraulic piping clamp structure of the construction machine.

As shown in FIG. 1, the hydraulic shovel 1 has an upper slewing body 10 pivotally mounted on a lower traveling body (not shown). The upper slewing body 10 has a control valve 2, a work attachment 3, and a plurality of hydraulic hoses 4 (one example of hydraulic piping according to the present invention) for connecting the control valve 2 and the work attachment 3 to each other.

The hydraulic hoses 4 is clamped and routed at a position suitable for the movable region of the work attachment 3 in the upper slewing body 10. Specifically, as shown in FIG. 2, the upper slewing body 10 of the hydraulic shovel 1 has a fastener 5 for fixing (clamping) the plurality of hydraulic hoses 4 arranged in the vertical direction to the frame body (machine body) of the upper slewing body 10.

As shown in FIG. 3, the fastener 5 includes a bracket 6 (support) for supporting the plurality of hydraulic hoses 4, a plurality of clamp members 7A-7F mounted on the bracket 6 and a pressing plate 8 for pressing the plurality of clamp members 7A-7F to the bracket 6.

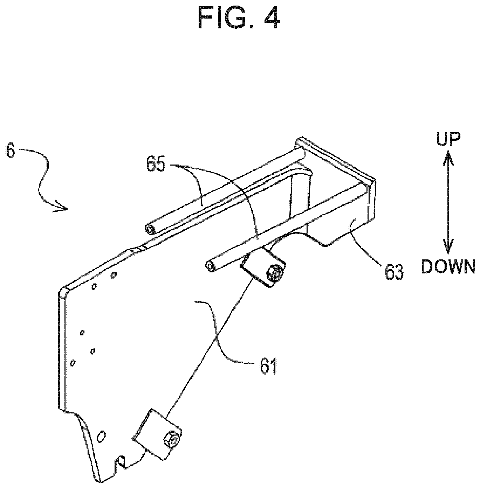

As shown in FIG. 4, the bracket 6 includes a mounting surface 61, a guide surface 63 (also referred to as an end wall and an end surface) orthogonal to the mounting surface 61, and two guide bars 65. The mounting surface 61 is a surface for mounting the bracket 6 on one surface of the frame body of the upper slewing body 10 (not shown), and the guide surface 63 supports the two guide bars 65. The two guide bars 65 extend along a predetermined arrangement direction (DR) from the guide surface 63. The side opposite to the guide surface 63 of the bracket 6 is opened, and the bracket 6 supports the plurality of hydraulic hoses 4 so that the plurality of hydraulic hoses 4 are aligned along the arrangement direction parallel to the two guide bars 65.

The bracket 6 is attached to the upper slewing body 10 so that the mounting surface 61 and the guide surface 63 are perpendicular to each other. As a result, two guide bars vertically arranged with respect to the guide surface 63 extend in the horizontal direction.

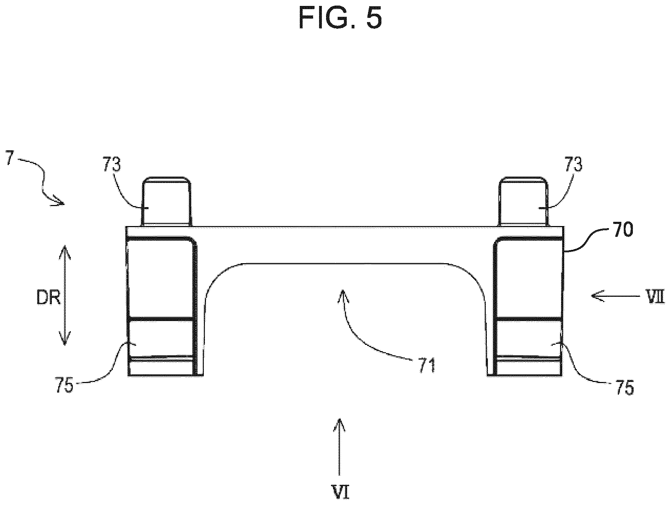

Next, referring to FIGS. 5-7, a plurality of clamp members 7A-7F mounted on the bracket 6 will be described. Since the plurality of clamp members 7A-7F is common components and have exactly the same structure, the clamp members 7A-7F will be described simply as the clamp member 7.

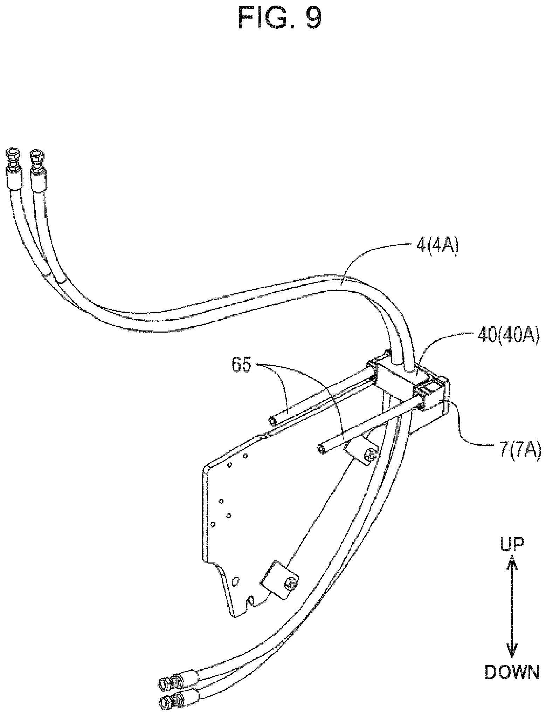

As shown in FIG. 5, the clamp member 7 is a U-shaped member in a top view having a fitting groove part 71 at the almost center, and clamps the hydraulic hose 4 to the bracket 6. As shown in FIG. 9, a rubber bush 40 attached to the hydraulic hose 4 is fitted to the fitting groove part 71. The fitting groove part 71 is an example of the holding portion according to the present invention, and in this embodiment, the hydraulic hose 4 is indirectly held in the fitting groove part 71 through the rubber bush 40. The rubber bush 40 may be part of the fastener 5 or may be part of the hydraulic hose 4.

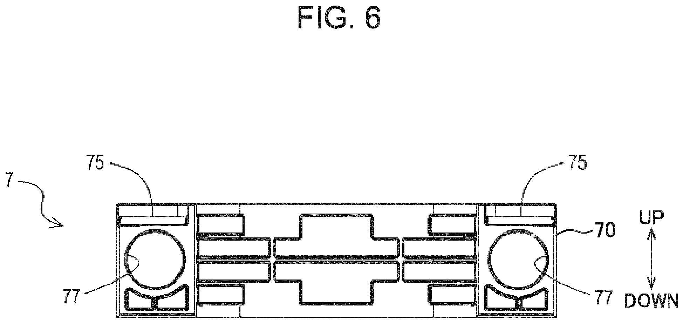

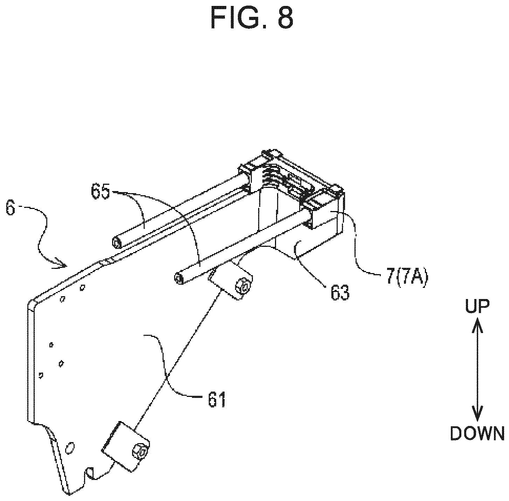

As shown in FIG. 6, two insertion holes 77 for inserting the two guide bars 65 are formed on both right and left sides of the clamp member 7. As shown in FIG. 8, the clamp member 7 is mounted on the bracket 6 by inserting the guide bars 65 into the insertion holes 77 of the clamp member 7. Each insertion hole 77 allows the guide bar 65 to be inserted along the arrangement direction DR. The arrangement direction DR may refer to a penetration direction in which the guide bar 65 penetrates through the insertion hole 77.

By inserting two insertion holes 77 of each of the plurality of clamp members 7 in order into the two guide bars 65, the plurality of clamp members 7 are mounted on the brackets 6 so as to be aligned along the arrangement direction DR.

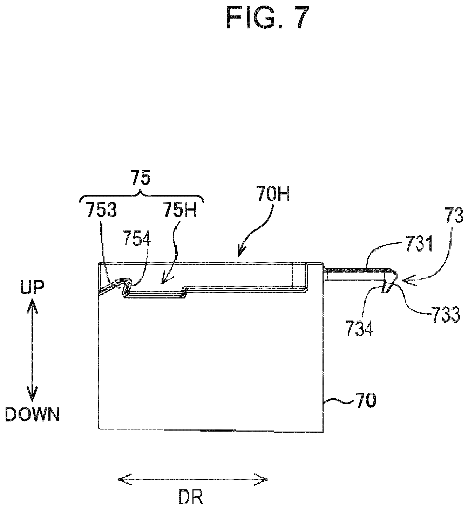

As shown in FIGS. 5 and 7, the clamp member 7 includes a main body portion 70, and an engaging portion 73 projecting from one end portion (an end portion of the main body portion 70, which is inserted into the guide bar 65) of the arrangement direction DR, in the arrangement direction DR. The engaging portion 73 is an example of a first engaging portion according to the present invention.

As shown in FIG. 7, the engaging portion 73 has an extending portion 731 extending along the arrangement direction DR, and a hooking portion 733 projecting obliquely downward in an acute angle from the distal end portion (extension destination) of the extending portion 731. The hooking portion 733 includes an abutting surface 734 (engaging surface). The abutting surface 734 is a surface intersecting the arrangement direction and is inclined from the extending portion 731 toward the main body portion 70.

The clamp member 7 includes an engaging portion 75 disposed on the upper surface portion 70H of the main body portion 70 at an end portion of the main body portion 70 on the opposite side to the end portion including the engaging portion 73 of the main body portion 70 (opposite to the end portion on the side to be inserted into the guide bar 65). The engaging portion 75 is an example of a second engaging portion according to the present invention. The engaging portion 75 has a shape engageable with the engaging portion 73.

Specifically, the engaging portion 75 has a hooked portion 753 engageable with the hooking portion 733 of the engaging portion 73. The hooked portion 753 has a shape (projection) projecting upward from the upper surface portion 70H in a side view shown in FIG. 7, and has an abutting surface 754 (engaged surface) engageable with the abutting surface 734. The engaging portion 75 has a recess 75H disposed adjacent to the hooked portion 753 in the arrangement direction DR. The recess 75H has a shape capable of receiving a hooking portion 733 in a state of being engaged with the hooked portion 753 in the upper surface portion 70H of each of the plurality of clamp members 7 when viewed in a cross section including the arrangement direction DR and the vertical direction respectively. As shown in FIGS. 6 and 7, the engaging portion 75 is not formed with a side wall in a direction (side direction) orthogonal to the arrangement direction DR and the vertical direction. In other words, in the recess 75H of the engaging portion 75, both ends in a direction orthogonal to the arrangement direction DR and the vertical direction are respectively opened to the outside of the clamp member 7.

Next, referring to FIG. 8 to FIG. 11, a procedure for mounting a plurality of clamp members 7A-7F on the bracket 6 will be described.

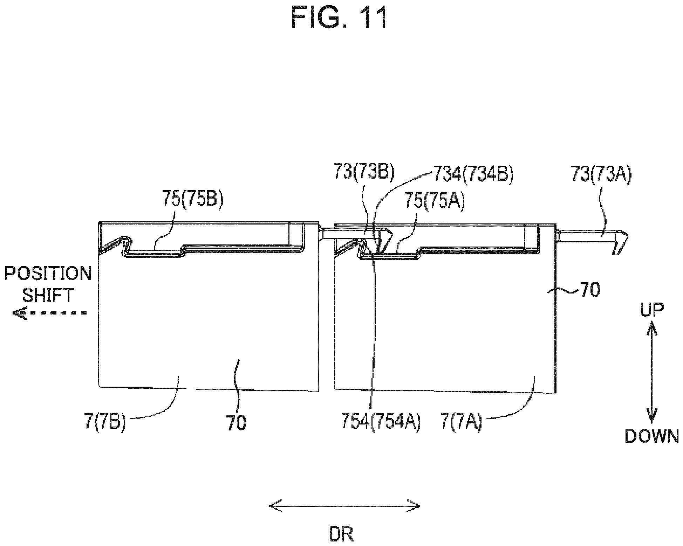

First, as shown in FIG. 8, the operator inserts the insertion holes 77 (77A) (see FIG. 6) of the first clamp member 7 (7A) into the guide bars 65 of the bracket 6, and inserts and mounts the first clamp member 7A into the side of the guide surface 63 of the bracket 6. At this time, the engaging portion 73A (specifically, the hooking portion) of the clamp member 7Ais disposed on the back side of the guide surface 63. As a result, even if the clamp member 7A is shifted in a direction (see the broken line in FIG. 11) in which the clamp member 7A is displaced from the guide bars 65, the engaging portion 73A of the clamp member 7A is engaged with the back side of the guide surface 63 to prevent the clamp member 7A from coming off.

Next, as shown in FIG. 9, a rubber bush 40 (40A) mounted on the hydraulic hose 4 (4A) is fitted to the fitting groove part 71 (71A) (see FIG. 5) of the first clamp member 7 (7A).

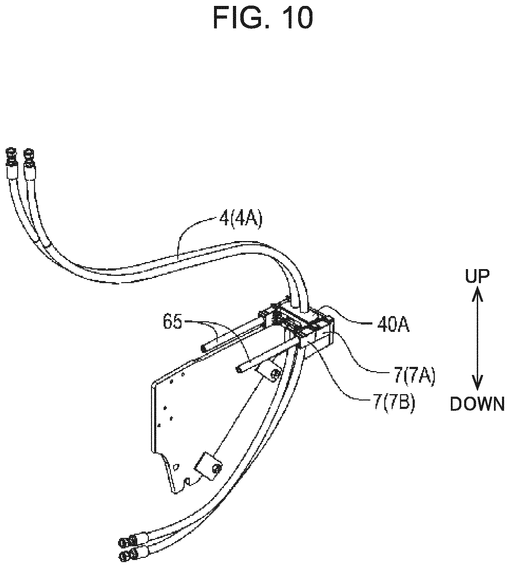

Thereafter, as shown in FIG. 10, the operator inserts the insertion holes 77 (77B) (see FIG. 6) of the second clamp members 7 (7B) into the guide bars 65 of the bracket 6, and inserts the second clamp member 7B into the side of the first clamp member 7A and mounts it.

As shown in FIG. 11, in a state where the second clamp member 7B is mounted, the engaging portion 73B of the clamp member 7B is disposed in an engaging portion 75A formed on the upper surface of the first clamp member 7A.

In order to simplify the description, the hydraulic hose 4A and the rubber bush 40A are omitted in FIG. 11, but in practice, the hydraulic hose 4Ais fitted into the fitting groove part 71A of the first clamp member 7A via the rubber bush 40A (see FIG. 10). Therefore, the second clamp member 7B may be displaced in the direction (see the broken line in FIG. 11) in which the second clamp member 7B is dismounted from the guide bars 65 under the influence of the reaction force of the hydraulic hose 4A. In this case, the abutting surface 734B of the second clamp member 7B abuts on the abutting surface 754A of the first clamp member 7A, thereby preventing the second clamp member 7B from coming off.

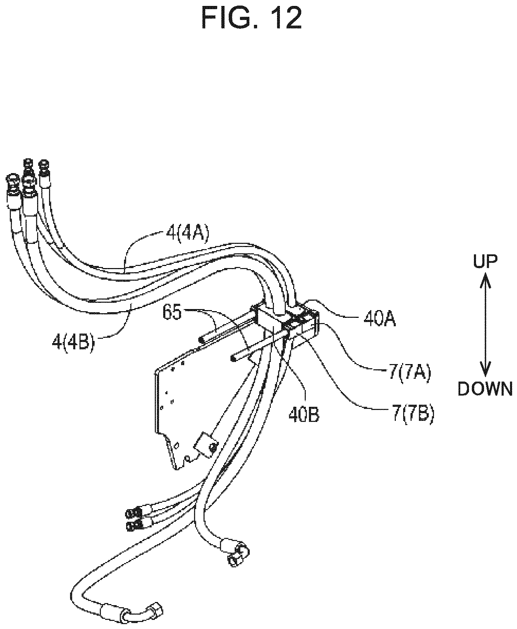

As shown in FIG. 12, a rubber bush 40 (40B) attached to the hydraulic hose 4 (4B) is fitted to the fitting groove part 71 (71B) of the second clamp members 7 (7B).

Thereafter, similar procedures are repeated for the third and subsequent clamp members 7C-7F, and all of the clamp members 7A-7F are mounted on the bracket 6.

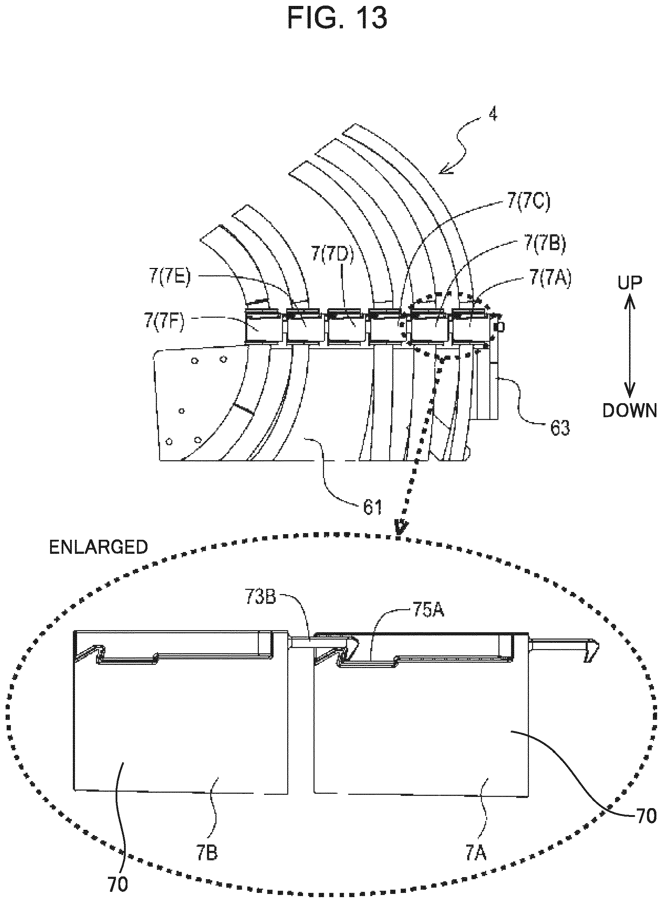

When the last clamp member 7F is mounted on the bracket 6, the clamp members 7A -7F are subjected to a force in the direction of coming off from the guide bar 65 by the influence of the reaction force of the hydraulic hose 4. Therefore, as shown in FIG. 13, the engaging portion 73B of the second clamp member 7B engages with the engaging portion 75A of the adjacent clamp member 7A. Although not shown, the third and subsequent clamp members 7C are similar.

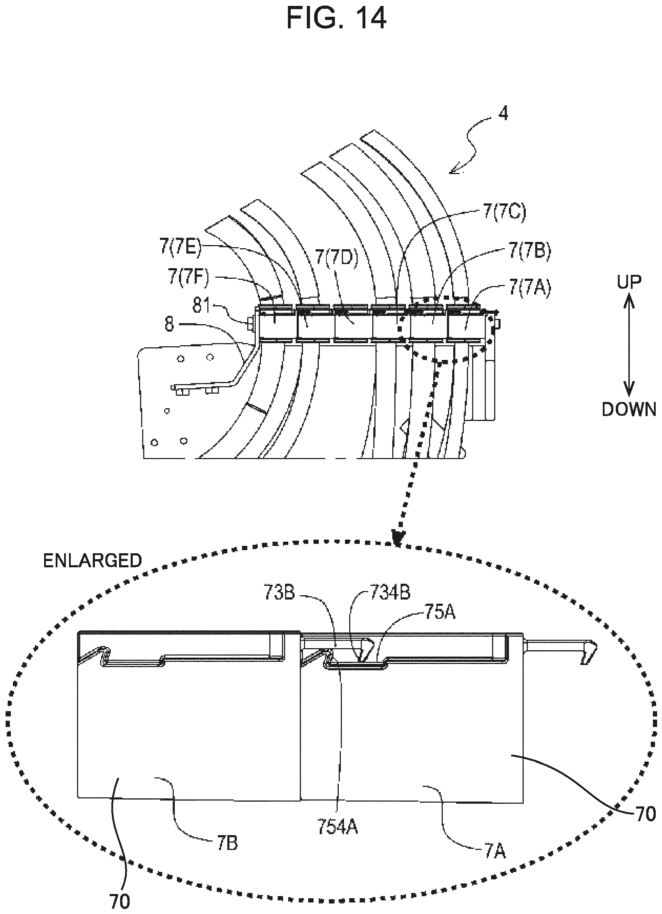

As shown in FIGS. 3 and 14, the pressing plate 8 capable of pressing the plurality of clamp members 7A-7F toward the guide surface 63 is provided on the clamp member 7F (the clamp member disposed at the farthest position from the guide surface 63) that is mounted finally. The pressing plate 8 is fixed (mounted) to the bracket 6 by fastening bolts 81 to female screws formed at each the tip of the two guide bars 65. When the pressing plate 8 is mounted by two bolts 81, the plurality of clamp members 7A-7F are pressed in a state of being sandwiched between the guide surface 63 and the pressing plate 8. In the present embodiment, in the arrangement direction DR, the length dimension of the two guide bars 65 (FIG. 4) is set to an integral multiple of the length dimension of the main body portion 70 of the plurality of clamp members 7.

When the plurality of clamp members 7A-7F are pressed by the pressing plate 8, the engagement state between the engaging portion 73B of the clamp member 7B and the engaging portion 75A of the clamp member 7A is released, as shown in FIG. 14. Specifically, the clamp member 7B is brought into close contact with the clamp member 7A, and the abutting surface 734B of the clamp member 7B is separated from the abutting surface 754A of the clamp member 7A in the arrangement direction DR. Although not shown, the third and subsequent clamp members 7C are similar. The engaging portion 73A of the first clamp member 7A is also separated from the guide surface 63.

In the above-described embodiment, for example, when the pressing plate 8 is not mounted on the bracket 6 and the two adjacent clamp members out of the plurality of clamp members 7A-7F move in a separating direction, the engaging portion 73 of one clamp member and the engaging portion 75 of the other clamp member are engaged with each other. Therefore, when the plurality of clamp members 7A-7F are assembled, the clamp member 7 does not come off from the guide bars 65. Accordingly, in the hydraulic shovel 1, a plurality of clamp members 7A-7F used for fastening the hydraulic hoses 4 can be easily assembled to the bracket 6.

Further, in the above-described embodiment, the engaging portion 73 has the hooking portion 733 projecting obliquely downward in the acute angle from the distal end portion of the extending portion 731, and the engaging portion 75 has the hooked portion 753 engageable with the hooking portion 733. Therefore, even when an external force is generated in the hydraulic hose 4, the engagement state between the engaging portion 73 and the engaging portion 75 is maintained firmly.

Further, in the above-described embodiment, when the plurality of clamp members 7A - 7F are pressed by the pressing plate 8, the main body portions 70 of the adjacent clamp members 7 are brought into close contact with each other, and the engagement state between the engaging portion 73 of one clamp member 7 and the engaging portion 75 of the other clamp member 7 is released (see FIG. 14). In other words, in a state in which the first clamp member of the plurality of clamp members is mounted on the bracket 6, the second clamp member of the plurality of clamp members is attached to the bracket 6, the engaging portion 73 of the second clamp member is disposed at an interval in the arrangement direction with respect to the hooked portion 753 after getting over the hooked portion 753 so that the main body portion 70 of the first clamp member and the main body portion 70 of the second clamp member can be brought into contact with each other in the bracket 6 (FIG. 14). The relative positions of the engaging portion 73 and the engaging portion 75 in the arrangement direction DR are set so that the engaging portion 73 of the second clamp member engages with the engaging portion 75 of the first clamp member and prevent the main body portions 70 to further separate when the main bodies of the first and second clamp members mounted on the bracket 6 are relatively moved in a direction away from each other. Therefore, after the assembly of the plurality of clamp members 7A-7F is completed, a load is not applied to the hooking portion 733 of the engaging portion 73 and the hooked portion 753 of the engaging portion 75 of each clamp member 7, and breakage of the hooking portion 733 and the hooked portion 753 can be prevented.

In the embodiment described above, since the engaging portion 75 is formed in the upper surface portion 70H of the clamp member 7, the workability during assembly is high as compared with the case where the engaging portion is formed on a side surface or a bottom surface of the clamp member 7.

In the embodiment described above, since no side wall is formed on the engaging portion 75 in the direction (lateral direction) orthogonal to the arrangement direction DR and the vertical direction, both ends of the recess 75H are opened to the outside of the clamp member 7 (see FIGS. 6 and 7). Therefore, even if dust enters the recess 75H of the engaging portion 75, the dust is easily discharged from both ends of the recess 75H, so that the dust is less likely to deposit on the recess 75H.

The hydraulic piping clamp structure according to the present invention is not limited to the embodiment described above, and various modifications and improvements are possible.

For example, in the above embodiment, two guide bars 65 are provided on the bracket 6. However, the present invention is not limited thereto. One guide bar may be provided on the bracket 6, or three or more guide bars may be provided. In this case, the number of insertion holes formed in the clamp member is changed according to the number of guide bars provided in the bracket 6.

In the above embodiment, the case where the hydraulic hoses 4 connecting the control valve 2 and the work attachment 3 are fastened by the fastener 5 is exemplified, but the hydraulic piping other than the hydraulic hose 4 may be fastened by the fastener 5.

In the above embodiment, the engaging portion 75, which is an example of the second engaging portion according to the present invention, is formed on the upper surface of the clamp member 7, but the second engaging portion may be formed on the side surface or the bottom surface of the clamp member 7. In this case, the first engaging portion is disposed at a position engageable with the second engaging portion.

In the above embodiment, the case where the hydraulic hose 4 is indirectly held by the fitting groove part 71 via the rubber bush 40 is exemplified, but the present invention is not limited thereto. For example, the shape of the fitting groove part 71 may be changed to a shape corresponding to the outer periphery of the hydraulic hose 4, and the hydraulic hose 4 may be directly held in the fitting groove part 71.

As described above, the hydraulic piping clamp device according to the present invention is suitable for clamping hydraulic hoses connecting a control valve of a hydraulic shovel and a work attachment.

Provided according to the present invention is a hydraulic piping clamp device for fixing a plurality of hydraulic pipes to a machine body of the construction machine in the construction machine, comprising: a support mounted on the machine body of the construction machine and including an end wall and at least one guide bar extending horizontally from the end wall, a side portion of the support opposite to the end wall being opened, and the support supporting the plurality of hydraulic pipes so that the plurality of hydraulic pipes is aligned along an arrangement direction parallel to the at least one guide bar: and a plurality of clamp members mounted to the support to clamp the plurality of hydraulic pipes on the support, each of the plurality of clamp members having a holding portion holding the hydraulic pipe and being formed of at least one insertion hole for allowing the at least one guide bar to be inserted along the arrangement direction. The plurality of clamp members is mounted on the support so that the plurality of clamp members is aligned along the arrangement direction by inserting the insertion hole of each of the plurality of clamp members in order into the at least one guide bar. Each of the plurality of clamp members includes: a main body portion: a first engaging portion projecting in the arrangement direction from one end portion of the main body portion in the arrangement direction; and a second engaging portion formed at other end portion opposite to the one end portion of the main body portion and having a shape capable of engaging with the first engaging portion. The relative positions of the first engaging portion and the second engaging portion in the arrangement direction are set so that, in a state in which the first clamp member of the plurality of clamp members is mounted on the support and the second clamp member of the plurality of clamp members is further mounted on the support, the first engaging portion of the second clamp member is disposed at an interval in the arrangement direction with respect to the second engaging portion of the first clamp member beyond the second engaging portion of the first clamp member thereby the main body portion of the first clamp member and the main body portion of the second clamp member can be brought into contact with each other in the support, and when the main body portions of the first clamp member and the second clamp member mounted on the support move in a direction away from each other, the first engaging portion of the second clamping member engages with the second engaging portion of the first clamping member to prevent further separate the body portions from each other.

According to the present invention, when two adjacent clamp members of the plurality of clamp members move in a direction away from each other, the first engaging portion of one of the clamp members engages with the second engaging portion of the other clamp member. Therefore, it is possible to easily assemble a plurality of clamp members used for fastening hydraulic piping in a construction machine.

In the above configuration, it is desirable that the first engaging portion has an extending portion extending from the main body portion in the arrangement direction and a hooking portion projecting downward from the tip of the extending portion, the second engaging portion has a hooked portion engageable with the hooking portion of the first engaging portion.

In the above configuration, it is desirable that the hooking portion has an engaging surface that intersects the arrangement direction and is inclined from the extending portion toward the main body portion, each of the main body portions of the plurality of clamp members has an upper surface portion, the hooked portion has a projection projecting upward from a part of the upper surface, and the projection has an engaged surface engageable with the engaging surface.

In the above configuration, it is desirable that the hydraulic piping clamp device further comprises a pressing plate that abuts against a clamping member disposed at a position farthest from the end wall of the support out of the plurality of clamp members and is mounted on the support to press the plurality of clamp members toward the end wall, the relative position of the hooking portion and the hooked portion in the arrangement direction is set so that the hooking portion of the second clamp member can be engaged with the hooked portion of the first clamp member in a state in which the pressing plate is not mounted on the support, and the hooking portion of the second clamping member is separated from the hooked portion of the first clamping member along the arrangement direction in a state in which the pressing plate is mounted on the support.

In the above configuration, it is desirable that the hydraulic piping is a hydraulic hose connecting a control valve of the construction machine and a work attachment to each other, each of the holding portions of the plurality of clamp members can directly or indirectly hold the hydraulic hose routed in the vertical direction, the second engaging portion further includes a recess disposed adjacent to the projection in the arrangement direction and on the upper surface portion of each of the plurality of clamp members when viewed in a cross section including the arrangement direction and the vertical direction, and capable of receiving the hooking portion in a state of being engaged with the hooked portion.

In the above configuration, it is desirable that both ends of the recess of the second engaging portion in a direction orthogonal to the arrangement direction and the vertical direction are respectively opened to the outside of the clamp member.

## Claims

1. A hydraulic piping clamp device for fixing a plurality of hydraulic pipes to a machine body of the construction machine in the construction machine, comprising:
a support mounted on the machine body of the construction machine and including an end wall and at least one guide bar extending horizontally from the end wall, a side portion of the support opposite to the end wall being opened, and the support supporting the plurality of hydraulic pipes so that the plurality of hydraulic pipes is aligned along an arrangement direction parallel to the at least one guide bar: and
a plurality of clamp members mounted to the support to clamp the plurality of hydraulic pipes on the support, each of the plurality of clamp members having a holding portion holding the hydraulic pipe and being formed of at least one insertion hole for allowing the at least one guide bar to be inserted along the arrangement direction, wherein
the plurality of clamp members is mounted on the support so that the plurality of clamp members is aligned along the arrangement direction by inserting the insertion hole of each of the plurality of clamp members in order into the at least one guide bar,
each of the plurality of clamp members includes:
a main body portion:
a first engaging portion projecting in the arrangement direction from one end portion of the main body portion in the arrangement direction; and
a second engaging portion formed at other end portion opposite to the one end portion of the main body portion and having a shape capable of engaging with the first engaging portion;
the relative positions of the first engaging portion and the second engaging portion in the arrangement direction are set so that, in a state in which the first clamp member of the plurality of clamp members is mounted on the support and the second clamp member of the plurality of clamp members is further mounted on the support, the first engaging portion of the second clamp member is disposed at an interval in the arrangement direction with respect to the second engaging portion of the first clamp member beyond the second engaging portion of the first clamp member, thereby the main body portion of the first clamp member and the main body portion of the second clamp member can be brought into contact with each other in the support, and when the main body portions of the first clamp member and the second clamp member mounted on the support move in a direction away from each other, the first engaging portion of the second clamping member engages with the second engaging portion of the first clamping member to prevent further separate the body portions from each other.

2. The hydraulic piping clamp device of the construction machine according to claim 1, wherein
the first engaging portion has an extending portion extending from the main body portion in the arrangement direction and a hooking portion projecting downward from the tip of the extending portion,
the second engaging portion has a hooked portion engageable with the hooking portion of the first engaging portion.

3. The hydraulic piping clamp device of the construction machine according to claim 2, wherein
the hooking portion has an engaging surface that intersects the arrangement direction and is inclined from the extending portion toward the main body portion,
each of the main body portions of the plurality of clamp members has an upper surface portion,
the hooked portion has a projection projecting upward from a part of the upper surface, and the projection has an engaged surface engageable with the engaging surface.

4. The hydraulic piping clamp device of the construction machine according to claim 2, further comprising:
a pressing plate that abuts against a clamping member disposed at a position farthest from the end wall of the support out of the plurality of clamp members and is mounted on the support to press the plurality of clamp members toward the end wall,
the relative position of the hooking portion and the hooked portion in the arrangement direction is set so that the hooking portion of the second clamp member can be engaged with the hooked portion of the first clamp member in a state in which the pressing plate is not mounted on the support, and the hooking portion of the second clamping member is separated from the hooked portion of the first clamping member along the arrangement direction in a state in which the pressing plate is mounted on the support.

5. The hydraulic piping clamp device of the construction machine according to claim 4, wherein
the hydraulic piping is a hydraulic hose connecting a control valve of the construction machine and a work attachment to each other,
each of the holding portions of the plurality of clamp members can directly or indirectly hold the hydraulic hose routed in the vertical direction,
the second engaging portion further includes a recess disposed adjacent to the projection in the arrangement direction and on the upper surface portion of each of the plurality of clamp members when viewed in a cross section including the arrangement direction and the vertical direction, and capable of receiving the hooking portion in a state of being engaged with the hooked portion.

6. The hydraulic piping clamp device of the construction machine according to claim 5, wherein
both ends of the recess of the second engaging portion in a direction orthogonal to the arrangement direction and the vertical direction are respectively opened to the outside of the clamp member.
